# EUROPEAN PATENT APPLICATION

(11) **EP 4 529 816 A1**
(43) Date of publication of application: **02.04.2025**
(21) Application number: 24201174.0
(22) Date of filing: 18.09.2024
(51) Int. Cl.: A47J 31/46

(54) **HOT BEVERAGE DISPENSING SYSTEM**

(30) Priority: 29.09.2023 IT 202300020175
(71) Applicant: SIMONELLI GROUP S.P.A., 62020 Belforte del Chienti (MC) (IT)
(72) Inventor: CINGOLANI, Claudio, 62032 Camerino (MC) (IT); PARRINI, Mauro, 63821 Porto Sant'Elpidio (FM) (IT); FELIZIANI, Marco, 62029 Tolentino (MC) (IT)
(74) Representative: Cutropia, Gianluigi

(57) **Abstract**

A hot beverage dispensing system (100) comprises a diverter (5) that can switch between a first conduit (6) of a hotter water circuit (A) and a second conduit (7) of a less hot water circuit (B) in such a way to vary a dispensing temperature (To) of the hot water to extract the beverage in a shortest time possible.

## Description

The present invention relates to a hot beverage dispensing system, in particular for coffee machines.

Recently, there has been a demand for hot beverages that are not only coffee-based, but also tea- or herbal tea-based, wherein the hot water is dispensed by the same coffee machine designed for dispensing the steam for espresso coffee.

EP4129124A1 in the name of the same applicant describes a filter holder with a special conical filter for dispensing a coffee-based beverage, such as American coffee.

Consequently, coffee machines require increasingly advanced technologies in order to rapidly vary the water temperature for each beverage that is being dispensed.

In fact, whereas the coffee extracted with the conical filter is normally dispensed at a temperature ranging from 85° to 95°C, some types of tea must be extracted at a lower temperature, even around 70°C.

Currently, the machines using the conical filter technology can dispense hot coffee- and tea-based beverages by using the water circuit of the coffee machine and in particular a dispensing unit made of heated metal that keeps the temperature of the beverage to be dispensed stable. Although this allows an excellent temperature repeatability for each beverage, a few minutes are required to change the temperature.

Such a problem is encountered when the operator wants to change the type of coffee and use a new type of coffee that requires a different extraction temperature from that required by the previous coffee. In addition, such a problem is worsened if the operator wants to dispense a cup of tea or herbal tea, immediately after dispensing a cup of coffee because the temperature of the hot water used for the tea must be at least 15°C lower than that of the water used for the coffee.

US20216/206065 describes a machine for dispensing hot beverages wherein the hot user water from the boiler is mixed with cold water in order to feed the dispensing unit with water having a lower temperature than the one supplied directly from the boiler.

US2006/042470 discloses a beverage machine comprising an injection nozzle that injects gas into a beverage. The injection nozzle is connected to a pressurization device so that the pressurization device receives a water volume from a pump to compress a gas volume that is contained internally and is discharged toward the injection nozzle.

The purpose of the present invention is to eliminate the drawbacks of the prior art by providing a hot beverage dispensing system that is capable of rapidly adapting to the water temperature required for dispensing the beverage.

Another purpose is to provide such a hot beverage dispensing system that is versatile and can be integrated into a conventional coffee machine.

Another purpose is to provide such a hot beverage dispensing system that is efficient, accurate, and reliable.

These purposes are achieved in accordance with the invention with the features of the appended independent claim 1.

Advantageous achievements of the invention appear from the dependent claims.

Further features of the invention will appear clearer from the following detailed description, referring to a purely illustrative and therefore non-limiting form of its embodiment, illustrated in the appended drawings, wherein:
Fig. 1 is a partially sectional diagrammatic view of a hot beverage dispensing system according to the invention;
Fig. 1A is an enlarged view of the dispensing unit of the hot beverage dispensing system of Fig. 1;
Fig. 2 is a hydraulic diagram of the hot beverage dispensing system of Fig. 1; and
Fig. 3 is a block diagram illustrating the operation of the hot beverage dispensing system of Fig. 1; and
Figs. 4A, 4B and 4C are three flow diagrams illustrating three algorithms implemented by the control unit of the hot beverage dispensing system of Fig. 3.

With the help of the figures, the hot beverage dispensing system according to the invention, which is generally indicated with reference numeral 100, is described.

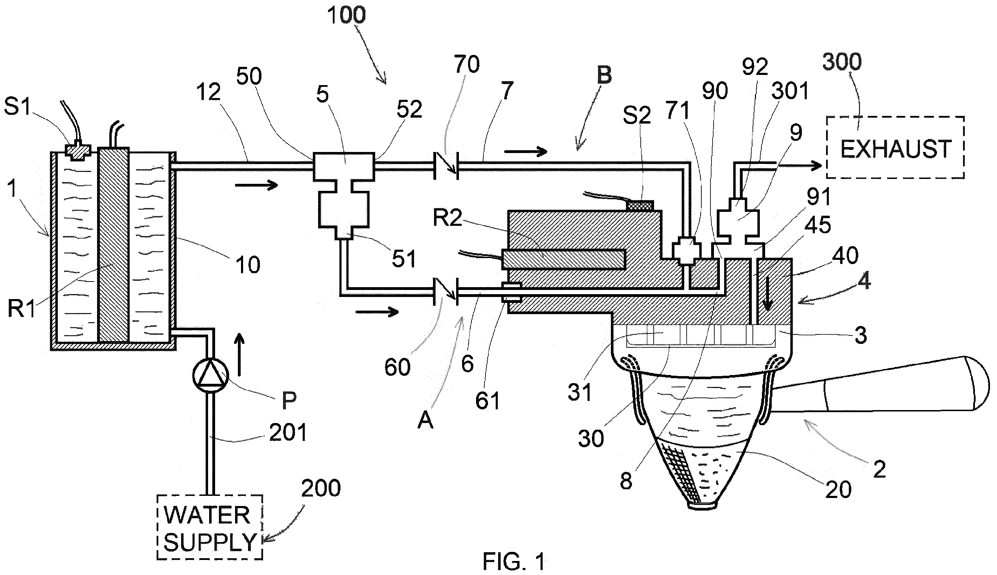

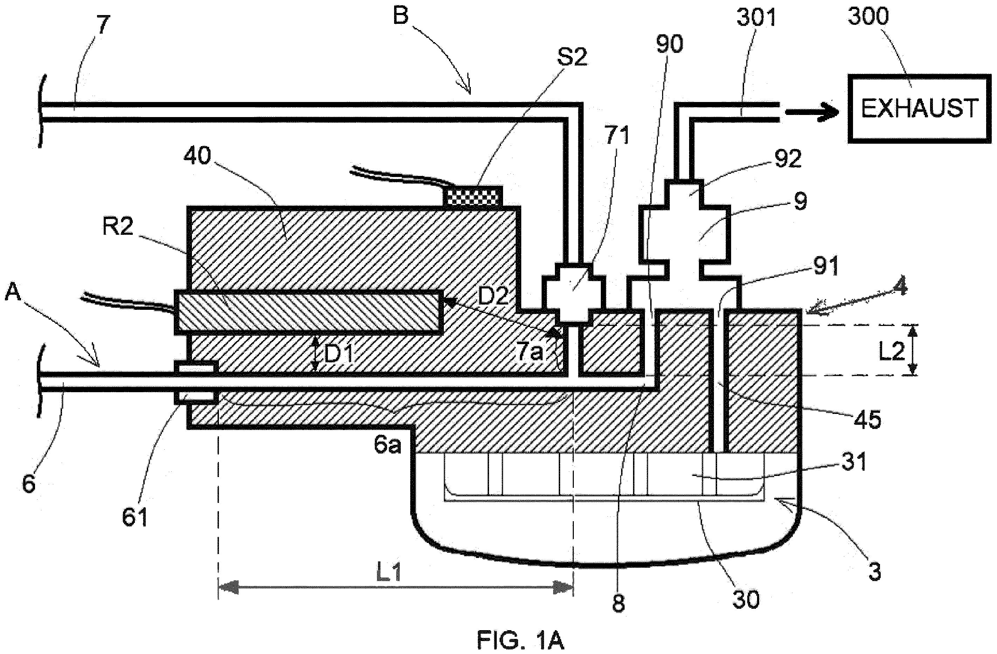

For now with reference to Fig. 1, the hot beverage dispensing system (100) comprises a dispensing unit (4) and a filter holder (2) suitable for being coupled to the dispensing unit (4).

The filter holder (2) has a filter (20) suitable for containing a product from which a hot beverage is to be extracted. The filter (20) may contain coffee, tea or other herbal tea products.

The filter (20) may be a conical filter as described in EP4129124A1 or it can be a traditional filter for filter holders of espresso coffee machines.

The dispensing unit (4) has a body (40) made of metal material that is a good conductor of heat.

A resistance (R2) is embedded in the body (40) of the dispensing unit to heat the body (40) of the dispensing unit. In such a way, by means of heat exchange, the body (40) of the dispensing unit heats the water that passes through the body and is dispensed into the filter (20) of the filter holder.

A temperature sensor (S2) is arranged in the body (40) of the dispensing unit to detect the temperature of the body of the dispensing unit.

The dispensing unit (4) comprises a shower screen (3) for dispensing hot water in droplets to the filter (20). The shower screen (3) comprises a perforated dish (30) that supports a flow restrictor (31). By way of example, such a shower screen (3) is described in EP3469962A1.

The hot beverage dispensing system (100) comprises a heater (1) arranged upstream of the dispensing unit (4). The heater (1) is a boiler with a resistance or an instantaneous coil heater or other type of heater.

The heater (1) includes a container (10) suitable for being filled with water and a resistance (R1) arranged in the container (10) to heat the water in the container. A temperature sensor (S1) is arranged in the container (10) of the heater to detect the temperature of the water contained in the container of the heater.

The container (10) of the heater (1) is filled with cold water coming from a water supply system (200). A supply conduit (201) connects the water supply system (200) to the container (10) of the heater. A pump (P) is arranged in the supply conduit (201) to pump the water from the water supply system (200) to the container (10) of the heater and ensure an adequate water pressure in the hot beverage dispensing system (100).

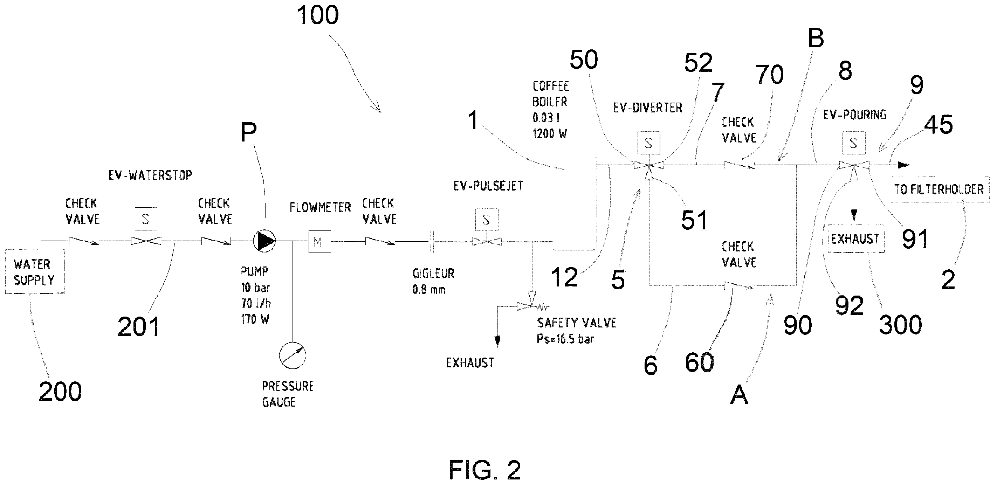

With reference also to Fig. 2, check valves, solenoid valves, a safety valve, a flow meter, a pressure gauge, and a jet may be provided in the supply conduit (201).

An outlet conduit (12) is connected to the container (10) of the heater to dispense pressurized hot water from the instantaneous heater.

A diverter (5) is arranged in the outlet conduit (12) of the heater to divert the water into a first conduit (6) forming part of a hotter circuit (A) or into a second conduit (7) forming part of a less hot circuit (B).

The diverter (5) comprises a three-way solenoid valve having an inlet (50) connected to the outlet conduit (12) of the heater, a first outlet (51) connected to the first conduit (6) of the hotter circuit (A), and a second outlet (52) connected to the second conduit (7) of the less hot circuit (B).

Respective check valves (60, 70) are (or may be) provided in the first conduit (6) and in the second conduit (7) to allow a one-way flow toward the dispensing unit (4).

Referring to Fig. 1A, the first conduit (6) of the warmer circuit (A) enters the body (40) of the dispensing unit through a first fitting (61) and is connected to a connecting conduit (8) formed in the dispensing unit. The first conduit (6) extends inside the body (40) of the dispensing unit for an inner conduit section (6a) having a length (L1) from the first fitting (61) to the connecting conduit (8).

The second conduit (7) of the less hot circuit (B) enters the body (40) of the dispensing unit through a second fitting (71) and is connected to the connecting conduit (8) obtained in the dispensing unit. The second conduit (7) extends inside the body (40) of the dispensing unit for an inner conduit section (7a) having a length (L2) from the second fitting (71) to the connecting conduit (8).

It should be noted that the inner conduit section (6a) of the first conduit (6) is longer than the inner conduit section (7a) of the second conduit (7). By way of example, the length (L1) of the inner conduit section (6a) of the first conduit (6) is 8-12 times longer than the length (L2) of the inner conduit section (7a) of the second conduit (7).

In view of the above, the water flowing in the inner conduit section (6a) of the first conduit (6) travels a longer path inside the body of the dispensing unit, does not cool down and keeps its temperature constant. In contrast, the water flowing in the inner conduit section (7a) of the second conduit (7) travels a shorter path inside the body of the dispensing unit, is not heated by heat exchange (if the body of the dispensing unit has a higher temperature) and keeps its temperature constant.

For such a reason, the first conduit (6) belongs to the hotter circuit (A) and the second conduit (7) belongs to the less hot circuit (B).

In addition, the inner conduit section (6a) of the first conduit (6) is arranged near the resistance (R2) of the dispensing unit. Specifically, considering that the resistance (R2) of the dispensing unit has an elongated tubular shape, the inner conduit section (6a) of the first conduit (6) extends into the body (40) of the dispensing unit in parallel direction to the resistance (R2) at a distance (D1) from the resistance (R2).

In contrast, the inner conduit section (7a) of the second conduit (7) is distant from the resistor (R2) of the dispensing unit. Specifically, the inner conduit section (7a) of the second conduit (7) extends orthogonally to the resistance (R2) at a distance (D2) from the end of the resistance that is greater than the distance (D1) of the inner conduit section (6a) of the first conduit (6) from the resistance (R2).

Such a particular arrangement of the inner conduit section (6a) of the first conduit (6) and of the inner conduit section (7a) of the second conduit (7) contributes to increase the temperature gap between the temperature of the water supplied from the first conduit (6) to the connecting conduit (8) and the temperature of the water supplied from the second conduit (7) to the connecting conduit (8).

The connecting conduit (8) is shorter than the inner conduit section (6a) of the first conduit (6) and is arranged in distal position with respect to the resistance (R2).

The connecting conduit (8) is connected to a pouring solenoid valve (9) that enables the flow of hot water towards a dispensing conduit (45) formed in the body (40) of the dispensing unit and communicating with the shower screen (3).

The pouring solenoid valve (9) is a three-way valve having an inlet (90) connected to the connecting conduit (8), a first outlet (91) connected to the dispensing conduit (45), and a second outlet (92) connected to an exhaust conduit (301) connected to an exhaust (300).

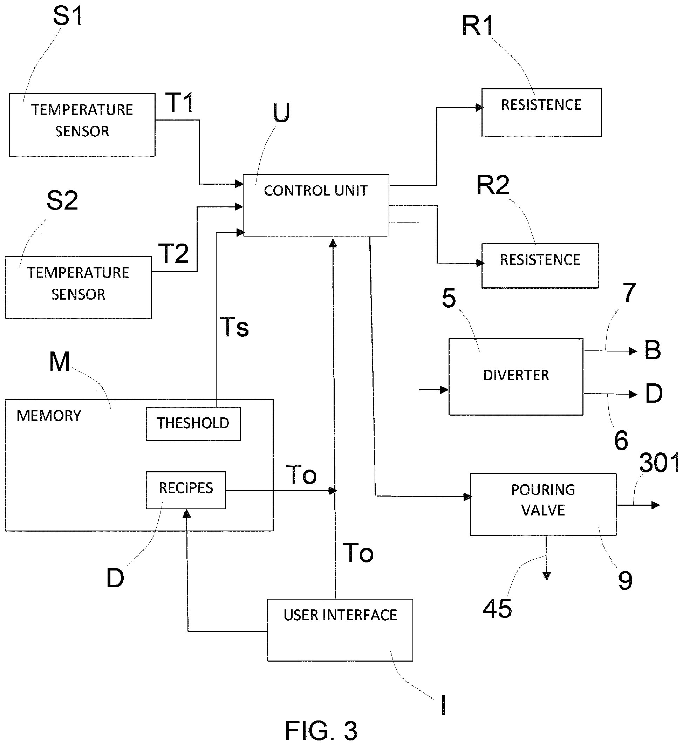

Referring to Fig. 3, the hot beverage dispensing system (100) comprises a control unit (U) operatively connected to the diverter (5) to control the diverter (5) so as to enable the first conduit of the hotter circuit (A) or the second conduit (7) of the less hot circuit (B), according to a dispensing temperature (To) of the hot beverage that is being set.

For the setting of the dispensing temperature (To), the hot beverage dispensing system (100) comprises a user interface (I), such as a control panel, used by the user to select a dispensing temperature (To) according to the hot beverage to be dispensed. The dispensing temperature (To) is sent to the control unit (U).

Moreover, the hot beverage dispensing system (100) comprises a memory (M) wherein a plurality of recipes (D) of hot beverages is stored. Each recipe (D) corresponds to a specific dispensing temperature (To).

The user interface (I) is connected to the memory (M) so that the user can select a recipe (D) and, according to the recipe selected by the user, the memory (M) returns the dispensing temperature (To) to the control unit (U).

So, the user can use the user interface (I) to select a dispensing temperature (To) or a recipe (D) to which a dispensing temperature (To) corresponds.

The memory (M) stores a threshold temperature (Ts) that differentiates beverages that require a high dispensing temperature from beverages that require a lower dispensing temperature. By way of example, the threshold temperature (Ts) can be chosen in the range between 80°C-90°C, preferably 83°C-87°C, preferably 85°C. Such a threshold temperature (Ts) is sent to the control unit (U) for a comparison with the dispensing temperature (To).

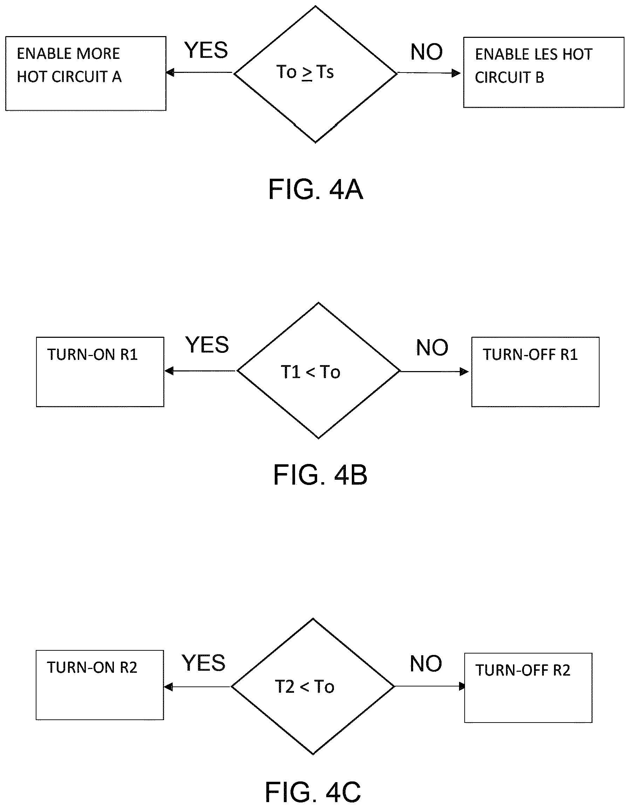

The control unit (U) is configured in such a way to compare the dispensing temperature (To) with the threshold temperature (Ts), according to an algorithm shown in Fig. 4A. If the dispensing temperature (To) is greater than or equal to the threshold temperature (Ts), the control unit (U) controls the diverter (5) so as to enable the first conduit (6) of the hotter circuit (A). On the other hand, if the dispensing temperature (To) is lower than the threshold temperature (Ts), the control unit (U) controls the diverter (5) so as to enable the second conduit (7) of the less hot circuit (B).

The control unit (U) is connected to the pouring valve (9) to enable the delivery of the hot water to the shower screen (3) of the dispensing unit.

The control unit (U) is operationally connected to the temperature sensors (S1, S2) and to the resistances (R1, R2) to control the resistances (R1, R2) in accordance with the temperatures (T1, T2) detected by the temperature sensors (S1, S2).

Once the dispensing temperature (To) has been set by the user, the control unit (U) controls the resistance (R1) of the heater to heat the water to a temperature equal to the dispensing temperature (To). Such a control can be done according to an algorithm shown in Fig. 4B. If the temperature (T1) detected by the sensor (S1) of the heater is lower than the dispensing temperature (To), the control unit turns on the resistance (R1) of the heater. If the temperature (T1) detected by the sensor (S1) of the heater is higher than or equal to the dispensing temperature (To), the control unit turns off the resistance of the heater.

In addition, the control unit (U) controls the resistance (R2) of the dispensing unit to keep the water flowing through the dispensing unit (1) at a temperature equal to the dispensing temperature (To). Such a control can be done according to an algorithm shown in Fig. 4C. If the temperature (T2) detected by the temperature sensor (S2) of the dispensing unit is lower than the dispensing temperature (To), the control unit turns on the resistance (R2) of the dispensing unit. If the temperature (T2) detected by the temperature sensor (S2) of the dispensing unit is higher than or equal to the dispensing temperature (To), the control unit turns off the resistance (R2) of the dispensing unit.

Let's now consider the case where the operator uses the user interface (I) to select a hot beverage, such as a beverage that requires a dispensing temperature (To) of 92°C, i.e., a temperature higher than the threshold temperature (Ts) set at 85°. The heater (1) heats the water to the dispensing temperature (To) of 92 °C, and the diverter (5) opens the hotter circuit (A). The water heated to the dispensing temperature (To) of 92°C flows through the first conduit (6), then through the connecting conduit (8) and to the pouring solenoid valve (9) that enables the dispensing into the dispensing conduit (45). During such a path there is a maximum contact of the water with the body (40) of the dispensing unit that has been properly heated to the dispensing temperature (To) of 92°C. In this way, the dispensing temperature (To) of 92°C is maintained as the water passes through the dispensing unit (4). Then water at a dispensing temperature (To) of 92°C can flow to the shower screen (3) to be dispensed.

Let's now consider the case where the operator uses the user interface (I) to select a beverage that is not too hot, such as a beverage that requires a dispensing temperature (To) of 80°C, i.e., a temperature lower than the threshold temperature (Ts) set at 85°C. The heater (1) heats the water to the dispensing temperature (To) of 80°C, and the diverter (5) opens the less hot circuit (B). The water heated to the dispensing temperature (To) of 80°C flows through the second conduit (7), then through the connecting conduit (8) and to the pouring solenoid valve (9) that enables the dispensing in the dispensing conduit (45). During such a path there is a minimal contact of the water with the body (40) of the dispensing unit to have a minimal influence of the temperature of the dispensing unit on the water temperature. In such a way, the water at a dispensing temperature (To) of 80°C can flow to the shower screen (3) to be dispensed.

With the system according to the invention, the dispensing temperature (To) can be changed by as much as 10°C going from a hot beverage to a not-too-hot drink with a waiting time of less than 5 seconds.

Equivalent variations and modifications may be made to the present embodiment of the invention within the reach of a person skilled in the art, but still within the scope of the invention as expressed by the appended claims.

## Claims

1. A hot beverage dispensing system (100) comprising:
- a dispensing unit (4) suitable for dispensing hot water; said dispensing unit (4) having a body (40), a resistance (R2) to heat the body and a temperature sensor (S2) to detect a temperature (T2) of the body,
- a filter holder (2) having a filter (20) suitable for containing a product from which the hot beverage is to be extracted; said filter holder (2) being suitable for being coupled to the dispensing unit (4),
- a heater (1) comprising a container (10) suitable for being filled with water, a resistance (R1) arranged in the container to heat the water, a temperature sensor (S1) for detecting a temperature (T1) of the water in the container, and an outlet conduit (12) for the delivery of heated water,
- a first conduit (6) of a hotter water circuit (A) connected to a connecting conduit (8) in the body (40) of the dispensing unit,
- a second conduit (7) of a less hot water circuit (B) connected to said connecting conduit (8) in the body (40) of the dispensing unit,
- a diverter (5) connected to the outlet conduit (12) of the heater, to the first conduit (6) of the hotter water circuit (A) and to the second conduit (7) of the less hot water circuit (B) to send the hot water coming out of the outlet conduit (12) of the heater to the first conduit (6) of the hotter water circuit (A) or to the second conduit (7) of the less hot water circuit (B),
- a user interface (I) to set a dispensing temperature (To) according to the beverage to be dispensed,
- a memory (M) for storing a threshold temperature (Ts) that differentiates beverages that require a high dispensing temperature from beverages that require a low dispensing temperature,
- a control unit (U) operatively connected to the user interface (I), to the memory (M), and to the diverter (5) to receive the dispensing temperature (To) and the threshold temperature (Ts) and control the diverter (5) based on a comparison between the dispensing temperature (To) and the threshold temperature (Ts); and
said control unit (U) being operatively connected to the temperature sensor (S1) of the heater, to the temperature sensor (S2) of the dispensing unit, to the resistance (R1) of the heater, and to the resistance (R2) of the dispensing unit to receive the temperature (T1) detected by the temperature sensor (S1) of the heater and the temperature (T2) detected by the temperature sensor (S2) of the dispensing unit and control the resistance (R1) of the heater based on a comparison between the temperature (T1) detected by the temperature sensor (S1) of the heater and said dispensing temperature (To) and control the resistance (R2) of the dispensing unit based on a comparison between the temperature (T2) detected by the temperature sensor (S2) of the dispensing unit and said dispensing temperature (To).

2. The system (100) according to claim 1, wherein said diverter (5) comprises a three-way solenoid valve having an inlet (50) connected to the outlet conduit (12) of the heater, a first outlet (51) connected to the first conduit (6) of the hotter circuit (A), and a second outlet (52) connected to the second conduit (7) of the less hot circuit (B).

3. The system (100) according to claim 1 or 2, wherein the first conduit (6) of the hotter circuit (A) enters the body (40) of the dispensing unit through a first fitting (61) and is connected to the connecting conduit (8) provided in the dispensing unit; the first conduit (6) extends inside the body (40) of the dispensing unit for an inner conduit section (6a) having a length (L1) from the first fitting (61) to the connecting conduit (8);
the second conduit (7) of the less hot circuit (B) enters the body (40) of the dispensing unit through a second fitting (71) and is connected to the connecting conduit (8) provided in the dispensing unit; the second conduit (7) extends inside the body (40) of the dispensing unit for an inner conduit section (7a) having a length (L2) from the second fitting (71) to the connecting conduit (8).

4. The system (100) according to claim 3, wherein the length (L1) of the inner conduit section (6a) of the first conduit (6) is 8-12 times longer than the length (L2) of the inner conduit section (7a) of the second conduit (7).

5. The system (100) according to claim 3 or 4, wherein the inner conduit section (6a) of the first conduit (6) is proximal to the resistance (R2) of the dispensing unit, and the inner conduit section (7a) of the second conduit (7) is distant from the resistance (R2) of the dispensing unit.

6. The system (100) according to claim 5, wherein the resistance (R2) of the dispensing unit has an elongated tubular shape; the inner conduit section (6a) of the first conduit (6) extends into the body (40) of the dispensing unit in parallel direction to the resistance (R2) at a distance (D1) from the resistance (R2), and the inner conduit section (7a) of the second conduit (7) extends orthogonally to the resistance (R2) at a distance (D2) from an end of the resistance that is greater than the distance (D1) of the inner conduit section (6a) of the first conduit (6) from the resistance (R2).

7. The system (100) according to any one of the preceding claims, wherein said threshold temperature (Ts) is chosen in the range of 80°-90°C, preferably 83°-87°C, most preferably 85°C.

8. The system (100) according to any one of the preceding claims, wherein a plurality of recipes (D) of hot beverages is stored in said memory (M) and each recipe (D) corresponds to a dispensing temperature (To) and the user interface (I) is connected to the memory (M) so that the user can select a recipe (D) and according to the recipe selected by the user, the memory (M) returns the dispensing temperature (To) relative to the selected recipe to the control unit (U).

9. The system (100) according to any one of the preceding claims, comprising a pouring solenoid valve (9) connected to the connecting conduit (8) to enable a hot water flow to a dispensing conduit (45) provided in the body (40) of the dispensing unit.

10. The system (100) according to claim 9, wherein said pouring solenoid valve (9) is a three-way valve having an inlet (90) connected to the connecting conduit (8), a first outlet (91) connected to the dispensing conduit (45), and a second outlet (92) connected to an exhaust conduit (301) connected to an exhaust (300).
